# FASCICULE DE BREVET EUROPEEN

(11) **EP 3 957 128 B1**
(45) Date de publication et mention de la délivrance du brevet: **10.07.2024**
(21) Numéro de dépôt: 20718329.4
(22) Date de dépôt: 16.04.2020
(51) Int. Cl.: H04W 76/28, H04W 60/02, H04W 88/02, H04W 48/12

(54) **PLANIFICATION D'UN INSTANT D'ÉMISSION D'UN MESSAGE SUR UN CANAL DE DIFFUSION**
PLANUNG EINES ZEITPUNKTES ZUR ÜBERTRAGUNG EINER NACHRICHT ÜBER EINEN RUNDFUNKKANAL
PLANNING AN INSTANT FOR TRANSMITTING A MESSAGE OVER A BROADCASTING CHANNEL

(30) Priorité: 18.04.2019 FR 1904162
(43) Date de publication de la demande: 23.02.2022
(73) Titulaire: UNABIZ, 31670 Labège (FR)
(72) Inventeur: MANSUY, Arnaud, 31300 TOULOUSE (FR); ZUNIGA, Juan Carlos, MONTREAL, Québec H4L 3J4 (CA)
(74) Mandataire: Ipside
(86) Numéro de dépôt international: PCT/EP2020/060702
(87) Numéro de publication internationale: WO 2020/212485

(56) Documents cités:
- US-A1- 2018 070 333
- US-A1- 2018 103 427
- TSOUKANERI GALINI ET AL: "On Device Grouping for Efficient Multicast Communications in Narrowband-IoT", 2018 IEEE 38TH INTERNATIONAL CONFERENCE ON DISTRIBUTED COMPUTING SYSTEMS (ICDCS), IEEE, 2 July 2018 (2018-07-02), pages 1442 - 1447, XP033375996, DOI: 10.1109/ICDCS.2018.00146
- RIZZI MATTIA ET AL: "Synchronization Uncertainty Versus Power Efficiency in LoRaWAN Networks", IEEE TRANSACTIONS ON INSTRUMENTATION AND MEASUREMENT, IEEE SERVICE CENTER, PISCATAWAY, NJ, US, vol. 68, no. 4, 1 April 2019 (2019-04-01), pages 1101 - 1111, XP011713868, ISSN: 0018-9456, [retrieved on 20190307], DOI: 10.1109/TIM.2018.2859639
- TSOUKANERI GALINI ET AL: "Group Communications in Narrowband-IoT: Architecture, Procedures, and Evaluation", IEEE INTERNET OF THINGS JOURNAL, IEEE, USA, vol. 5, no. 3, 1 June 2018 (2018-06-01), pages 1539 - 1549, XP011685081, DOI: 10.1109/JIOT.2018.2807619

## Description

### Domaine technique

La présente invention appartient au domaine des systèmes de communication sans fil, et concerne plus particulièrement un procédé d'émission, par un réseau d'accès, d'un message sur un canal de diffusion à destination d'un groupe de terminaux.

### Etat de la technique

La présente invention trouve une application particulièrement avantageuse, bien que nullement limitative, pour des systèmes de communication sans fil mis en oeuvre pour des applications du type M2M (acronyme anglo-saxon pour « Machine-to-Machine ») ou du type « Internet des objets » (« Internet of Things » ou loT dans la littérature anglo-saxonne).

Dans de tels systèmes de communication sans fil, les échanges de messages sont essentiellement monodirectionnels, en l'occurrence sur un lien montant entre des terminaux et un réseau d'accès dudit système.

Les terminaux émettent des messages sur le lien montant qui sont collectés par des stations de base du réseau d'accès, de préférence sans avoir à s'associer préalablement à une ou plusieurs stations de base du réseau d'accès. En d'autres termes, les messages émis par un terminal sur le lien montant ne sont pas destinés à une station de base spécifique du réseau d'accès, et le terminal émet ses messages en supposant qu'ils pourront être reçus par au moins une station de base. De telles dispositions sont avantageuses en ce que le terminal n'a pas besoin de réaliser des mesures régulières, gourmandes notamment d'un point de vue consommation électrique, pour déterminer la station de base la plus appropriée pour recevoir ses messages. La complexité repose sur le réseau d'accès, qui doit être capable de recevoir des messages montants pouvant être émis à des instants arbitraires et sur des fréquences centrales arbitraires.

Un tel mode de fonctionnement, dans lequel les échanges de messages sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de messages dans l'autre direction, à savoir sur un lien descendant du réseau d'accès vers les terminaux.

En particulier, il peut être avantageux d'émettre des messages sur un canal de diffusion, globale ou multipoint (respectivement « broadcast » ou « multicast » dans la littérature anglo-saxonne), à destination des terminaux. Notamment, l'émission de messages sur un canal de diffusion peut être mise en oeuvre pour effectuer des mises à jour de logiciels utilisés par un groupe de terminaux, le groupe de terminaux pouvant être tous les terminaux (canal de diffusion globale) ou bien une partie seulement desdits terminaux (canal de diffusion multipoint).

Dans un système de communication sans fil pour des applications M2M et/ou loT, la consommation électrique des terminaux doit souvent être réduite au maximum, en particulier lorsqu'ils sont opérés sur batterie.

Pour limiter la consommation électrique des terminaux, il est connu d'émettre un message descendant, à destination d'un terminal, au cours d'une fenêtre d'écoute prédéterminée par rapport à un message montant émis par ledit terminal. Plus particulièrement, après avoir émis un message montant, un terminal passe dans un mode veille (ou économie d'énergie) sur une fenêtre de veille de durée prédéterminée. A la fin de ladite fenêtre de veille, le terminal quitte le mode veille pour écouter le lien descendant sur une fenêtre d'écoute de durée limitée, en attente d'un message descendant émis par une station de base.

Côté réseau d'accès, les fenêtres d'écoute des différents terminaux peuvent être déterminées à partir des messages montants reçus de ces terminaux, et le réseau d'accès doit organiser l'émission des messages descendants pour qu'ils puissent être reçus, par les terminaux correspondants, au cours des fenêtres d'écoute respectives desdits terminaux.

Du fait que les terminaux n'écoutent le lien descendant que sur des fenêtres d'écoute prédéterminées, la consommation électrique additionnelle requise pour la réception de messages descendants est limitée, et lesdits terminaux peuvent être le plus souvent en mode veille. En outre, du fait qu'ils ne doivent pas émettre et recevoir simultanément, de tels terminaux peuvent être semi-duplex (« half-duplex » dans la littérature anglo-saxonne), et peuvent donc être peu coûteux à fabriquer.

Avec de telles dispositions, les terminaux ne sont cependant pas adaptés pour écouter des messages émis de façon conventionnelle par le réseau d'accès sur un canal de diffusion. En effet, pour recevoir des messages émis sur un canal de diffusion, un terminal doit généralement écouter de façon permanente, ou au moins de façon récurrente, ledit canal de diffusion.

Dans un tel système de communication sans fil, il n'est également pas rare de mettre en oeuvre des stations de base de type semi-duplex, afin de limiter le coût de fabrication desdites stations de base, et plus généralement du réseau d'accès. Or une station de base qui émet un message sur un canal de diffusion sur le lien descendant n'est pas disponible pour recevoir des messages émis sur lien montant. Par conséquent, il peut être souhaitable d'optimiser la planification d'un canal de diffusion dans le but de limiter la durée d'indisponibilité d'une station de base pour la réception de messages sur le lien montant.

Enfin, dans un tel système de communication sans fil, la bande passante est généralement très limitée et il convient de réduire au maximum la taille des messages échangés entre le réseau d'accès et les terminaux. Les méthodes existantes d'allocation d'un canal de diffusion à un groupe de terminaux ne prennent cependant pas en compte cette contrainte.

Le document « On Device Grouping for Efficient Multicast Communications in Narrowband-IoT », G. Tsoukaneri et al., décrit différentes méthodes pour planifier l'émission d'un message de diffusion par un réseau d'accès sur un canal de diffusion à destination d'un groupe de terminaux NB-loT (acronyme anglais pour « *Narrow-Band Internet-Of-Things* », en français « technologie à bande étroite pour l'internet des objets ») pour la 5G (cinquième génération de standards pour la téléphonie mobile). Chaque terminal est configuré pour respecter un cycle de réception discontinue (cycle DRX/eDRX) comportant une période de veille et une période active. Chaque période active correspond à une opportunité pour le réseau d'accès d'envoyer un message d'appel (« *Paging message* ») au terminal afin de lui envoyer des données sur un lien descendant. Après avoir reçu lesdites données, le terminal reste actif pendant une période (« *inactivity timer, TI* ») avant de reprendre son cycle DRX/eDRX. Le réseau d'accès peut alors faire en sorte que les terminaux soient actifs en même temps pendant une période Tl pour recevoir un message multicast. Les méthodes décrites dans ce document supposent toutefois une synchronisation entre les terminaux et le réseau d'accès : les terminaux sont en effet configurés pour recevoir des messages d'appel (« *Paging message* ») et pour émettre des messages d'accès (« *Random Access messages* ») à des instants prédéterminés et connus à la fois par le terminal et le réseau d'accès.

### Exposé de l'invention

La présente invention (définit par les revendications indépendantes) a pour objectif de remédier à tout ou partie des limitations des solutions de l'art antérieur, notamment celles exposées ci-avant.

A cet effet, et selon un premier aspect, l'invention concerne un procédé d'émission d'au moins un message, dit « message de diffusion », par un réseau d'accès d'un système de communication sans fil. Ledit message est émis sur un canal de diffusion à destination d'un groupe de terminaux dudit système de communication sans fil. Les terminaux sont configurés pour émettre de manière récurrente et de façon asynchrone (c'est à dire, pas connu) par rapport au réseau d'accès (30) des messages, dits « messages d'interrogation », sur un lien montant à destination du réseau d'accès.

Le procédé comporte :
- une détermination, par le réseau d'accès, d'un instant d'émission du message de diffusion à partir d'une information sur la récurrence des messages d'interrogation émis par les terminaux dudit groupe,
- avant l'émission du message de diffusion, une émission, par le réseau d'accès, en réponse à chaque message d'interrogation reçu d'un terminal appartenant audit groupe, sur une liaison point à point à destination dudit terminal, d'un message, dit « message de réponse », comportant un ou plusieurs paramètres relatifs à l'émission du message de diffusion, ledit message de réponse étant émis de sorte à être reçu par ledit terminal pendant une fenêtre d'écoute d'une durée prédéterminée suivant l'émission du message d'interrogation,
- une émission, par ledit réseau d'accès, du message de diffusion sur le canal de diffusion à l'instant d'émission déterminé.

Les messages d'interrogation sont émis de façon asynchrone par rapport au réseau d'accès. On entend par là que les messages d'interrogation sont émis à des instants arbitraires pour le réseau d'accès, ou autrement dit le réseau d'accès ne sait pas nécessairement déterminer à quel moment un message d'interrogation peut être émis par un terminal. Cela signifie notamment qu'un message d'interrogation n'est pas émis en réponse à un événement déclenchant issu du réseau d'accès. Pour un terminal particulier, le réseau d'accès connaît par exemple seulement un intervalle de temps maximal séparant deux messages d'interrogation successivement émis par le terminal (il convient de noter que cette information peut être connue a priori par le réseau d'accès, ou bien elle peut être estimée par le réseau d'accès en fonction des messages précédemment reçus dudit terminal).

Un message émis sur le canal de diffusion est émis par le réseau d'accès à destination de tous les terminaux du groupe. En revanche, un message émis sur une liaison point à point entre le réseau d'accès et un terminal est émis seulement à destination dudit terminal.

De telles dispositions permettent d'optimiser la planification d'un canal de diffusion tout en respectant la contrainte selon laquelle les terminaux écoutent un lien descendant pendant une fenêtre d'écoute prédéterminée après l'émission d'un message sur un lien montant. En effet, l'instant d'émission du message de diffusion sur le canal de diffusion peut être déterminé de sorte à s'assurer que tous les terminaux du groupe ont pu être configuré pour recevoir ledit message de diffusion, c'est-à-dire que tous les terminaux du groupe ont eu une opportunité de recevoir, via les messages de réponse, les informations nécessaires à la réception du message de diffusion, comme par exemple une information sur l'instant d'émission dudit message de diffusion.

Il convient de noter qu'une diffusion globale ou multipoint peut comporter plusieurs messages de diffusion qui sont émis séquentiellement à destination des terminaux du groupe. Dans un tel cas, le réseau d'accès détermine l'instant d'émission du premier message de l'ensemble des messages à diffuser. L'instant d'émission du premier message de l'ensemble des messages à diffuser peut ensuite être communiqué aux différents terminaux du groupe dans les messages de réponse.

Dans des modes particuliers de mise en oeuvre, le procédé d'émission peut comporter en outre l'une ou plusieurs des caractéristiques suivantes, prises isolément ou selon toutes les combinaisons techniquement possibles.

Dans des modes particuliers de mise en oeuvre, un message de réponse émis à un terminal du groupe comporte un ou plusieurs paramètres parmi les paramètres suivants :
- une information sur l'instant d'émission du message de diffusion,
- un identifiant de groupe assigné dynamiquement par le réseau d'accès,
- une fréquence centrale du canal de diffusion,
- lorsque plusieurs messages de diffusion doivent être diffusés séquentiellement, un numéro de séquence d'un premier message de diffusion, et/ou un numéro de séquence d'un dernier message de diffusion, et/ou un nombre de messages de diffusion.

Le fait d'assigner dynamiquement un identifiant de groupe permet de limiter la taille des messages échangés entre le réseau d'accès et les terminaux. En effet, dans les méthodes conventionnelles de diffusion globale ou multipoint, des identifiants de groupe sont définis a priori de manière statique. Il convient dans ce cas de choisir une taille suffisamment grande pour encoder la valeur de l'identifiant de groupe afin de s'assurer que le nombre maximal d'identifiants de groupe différents pouvant être définis est suffisant. Il n'est cependant pas facile de prévoir à un instant donné le nombre d'identifiants de groupe qu'il faudra supporter dans le futur. Au contraire, en assignant dynamiquement un identifiant de groupe, le réseau d'accès peut réutiliser des identifiants de groupe qui ont déjà été utilisés dans le passé pour d'autres canaux de diffusion, mais qui ne sont pas présentement utilisés. La taille du paramètre qui encode la valeur de l'identifiant de groupe peut alors être définie de façon optimale en fonction du nombre maximal de canaux de diffusion qui sont susceptibles d'exister simultanément à un instant donné et dans une zone géographique donnée, et non pas en fonction du nombre total de canaux de diffusion qu'il faut supporter pour le système 10 de communication. De telles dispositions permettent de réduire la taille du paramètre qui encode une valeur d'identifiant de groupe, et ainsi de limiter la taille du message de réponse qui comporte l'identifiant de groupe.

Le fait d'assigner dynamiquement un identifiant de groupe permet également d'éviter d'avoir à mémoriser une liste prédéfinie d'identifiants de groupe au niveau du réseau d'accès et des terminaux.

Lorsque plusieurs messages de diffusion doivent être diffusés séquentiellement, le fait de communiquer aux terminaux du groupe un numéro de séquence du premier message de diffusion, et/ou un numéro de séquence du dernier message de diffusion, et/ou un nombre de messages de diffusion permet d'optimiser davantage l'utilisation des ressources pour le canal de diffusion.

Dans des modes particuliers de mise en oeuvre, l'information sur la récurrence des messages d'interrogation émis par les terminaux du groupe est un intervalle de temps maximal séparant deux messages d'interrogation émis par un terminal du groupe.

Dans des modes particuliers de mise en oeuvre, la détermination d'un instant d'émission du message de diffusion comporte une détermination d'une période d'attente minimale pour recevoir au moins un message d'interrogation en provenance de chaque terminal du groupe. L'instant d'émission du message de diffusion est déterminé pour être postérieur à l'expiration de ladite période d'attente minimale.

Dans des modes particuliers de mise en oeuvre, le procédé comporte en outre une sélection, par le réseau d'accès, d'un ensemble de stations de base du réseau d'accès participant à l'émission du message de diffusion, en fonction des messages d'interrogation reçus par les terminaux du groupe.

Dans des modes particuliers de mise en oeuvre, une station de base du réseau d'accès est sélectionnée pour émettre le message de diffusion seulement si ladite station de base a reçu un nombre de messages d'interrogation en provenance des terminaux du groupe supérieur à un seuil prédéterminé.

De telles dispositions permettent là encore d'optimiser la planification des canaux de diffusion et l'utilisation des ressources radio par le réseau d'accès.

Selon un second aspect, l'invention concerne un réseau d'accès d'un système de communication sans fil. Le réseau d'accès comporte une pluralité de stations de base adaptées à échanger des messages avec des terminaux dudit système de communication sans fil. Lesdits terminaux sont configurés pour émettre de manière récurrente et de façon asynchrone par rapport au réseau d'accès (30) des messages, dits « messages d'interrogation », sur un lien montant à destination du réseau d'accès. Le réseau d'accès est configuré pour émettre au moins un message, dit « message de diffusion » à destination d'un groupe de terminaux sur un canal de diffusion. Le réseau d'accès est en outre configuré pour:
- déterminer un instant d'émission du message de diffusion à partir d'une information sur la récurrence des messages d'interrogation émis par les terminaux dudit groupe,
- avant l'émission du message de diffusion, émettre, en réponse à chaque message d'interrogation reçu d'un terminal appartenant audit groupe, sur une liaison point à point à destination dudit terminal, un message, dit « message de réponse », comportant un ou plusieurs paramètres relatifs à l'émission du message de diffusion, ledit message de réponse étant émis de sorte à être reçu par ledit terminal pendant une fenêtre d'écoute d'une durée prédéterminée suivant l'émission du message d'interrogation,
- émettre le message de diffusion sur le canal de diffusion à l'instant d'émission déterminé.

Dans des modes particuliers de réalisation, le réseau d'accès peut comporter en outre l'une ou plusieurs des caractéristiques suivantes, prises isolément ou selon toutes les combinaisons techniquement possibles.

Dans des modes particuliers de réalisation, le message de réponse émis à un terminal du groupe comporte un ou plusieurs paramètres parmi les paramètres suivants :
- une information sur l'instant d'émission du message de diffusion,
- un identifiant de groupe assigné dynamiquement par le réseau d'accès (30),
- une fréquence centrale du canal de diffusion,
- lorsque plusieurs messages de diffusion doivent être diffusés séquentiellement, un numéro de séquence d'un premier message de diffusion, et/ou un numéro de séquence d'un dernier message de diffusion, et/ou un nombre de messages de diffusion.

Dans des modes particuliers de réalisation, l'instant d'émission du message de diffusion est déterminé en fonction d'une période d'attente minimale nécessaire pour recevoir au moins un message d'interrogation en provenance de chaque terminal du groupe.

Dans des modes particuliers de réalisation, le réseau d'accès est configuré en outre pour sélectionner un ensemble de stations de base du réseau d'accès participant à l'émission du message de diffusion, en fonction des messages d'interrogation reçus par les terminaux du groupe.

Selon un troisième aspect, l'invention concerne un terminal d'un système de communication sans fil comportant un réseau d'accès. Le réseau d'accès comporte une pluralité de stations de base adaptées à échanger des messages avec ledit terminal. Le terminal est configuré pour émettre de manière récurrente et de façon asynchrone par rapport au réseau d'accès (30) un message, dit « message d'interrogation », sur un lien montant à destination du réseau d'accès. Le réseau d'accès est configuré pour émettre au moins un message, dit « message de diffusion », sur un canal de diffusion, à destination d'un groupe de terminaux auquel ledit terminal appartient. Le terminal est configuré pour recevoir sur une liaison point à point entre le réseau d'accès et le terminal, un message, dit « message de réponse », comportant une information sur l'instant d'émission dudit message de diffusion et/ou, lorsque plusieurs messages de diffusion doivent être diffusés séquentiellement, des informations permettant de déterminer un ensemble de numéro de séquences destinés au terminal. Le message de réponse est reçu par ledit terminal en réponse audit message d'interrogation pendant une fenêtre d'écoute d'une durée prédéterminée suivant l'émission du message d'interrogation.

Dans des modes particuliers de réalisation, le terminal peut comporter en outre l'une ou plusieurs des caractéristiques suivantes, prises isolément ou selon toutes les combinaisons techniquement possibles.

Dans des modes particuliers de réalisation, le message de réponse comporte une information sur l'instant d'émission dudit au moins un message de diffusion, et le terminal est configuré commencer à écouter le canal de diffusion pour recevoir le ou les messages de diffusion à partir dudit instant d'émission.

Dans des modes particuliers de réalisation, plusieurs messages de diffusion doivent être émis séquentiellement sur le canal de diffusion et chaque message comporte un numéro de séquence. Le message de réponse comporte des informations permettant de déterminer un ensemble de numéro de séquences destinés au terminal. Le terminal est configuré pour considérer uniquement les messages de diffusion dont le numéro de séquence est inclus dans l'ensemble de numéros de séquence destinés au terminal. Le terminal est configuré pour ignorer les autres messages de diffusion pour lesquels le numéro de séquence n'est pas inclus dans l'ensemble de numéros de séquence destinés au terminal.

### Présentation des figures

L'invention sera mieux comprise à la lecture de la description suivante, donnée à titre d'exemple nullement limitatif, et faite en se référant aux figures qui représentent :
[Fig. 1] une représentation schématique d'un système de communication sans fil,
[Fig. 2] un diagramme illustrant les principales étapes d'un procédé d'émission de messages par un réseau d'accès,
[Fig. 3] un diagramme illustrant les échanges de messages impliqués dans le procédé d'émission selon l'invention,
[Fig. 4] un diagramme illustrant les principales étapes d'un mode particulier de mise en oeuvre d'un procédé d'émission de messages par un réseau d'accès.

Dans ces figures, des références identiques d'une figure à une autre désignent des éléments identiques ou analogues. Pour des raisons de clarté, les éléments représentés ne sont pas à l'échelle, sauf mention contraire.

### Description des modes de réalisation

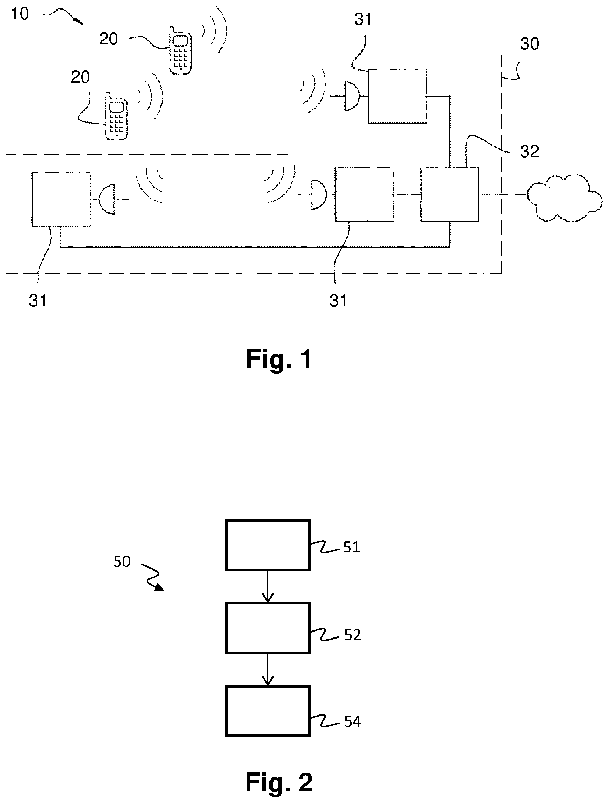

La figure 1 représente schématiquement un système 10 de communication sans fil comportant plusieurs terminaux 20 et un réseau d'accès 30 comportant plusieurs stations de base 31.

Les terminaux 20 et les stations de base 31 du réseau d'accès 30 échangent des messages sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Dans la suite de la description, on se place à titre d'exemple et de manière non limitative dans le cas d'un système de communication sans fil du type LPWAN (acronyme anglais de « Low Power Wide Area Network »). Un tel système de communication sans fil est un réseau d'accès longue portée à faible consommation énergétique dont les débits sont généralement inférieurs à 1 Mbits/s. De tels systèmes de communication sans fil UNB sont particulièrement adaptés pour des applications du type loT.

Dans des modes particuliers de mise en oeuvre, le système 10 de communication sans fil peut être un système de communication à bande ultra étroite. Par « bande ultra étroite » (« Ultra Narrow Band » ou UNB dans la littérature anglo-saxonne), on entend que le spectre fréquentiel instantané des signaux radio émis par les terminaux est de largeur fréquentielle inférieure à deux kilohertz, voire inférieure à un kilohertz. Un tel système permet de limiter significativement la consommation électrique des terminaux lorsqu'ils communiquent avec le réseau d'accès.

Les terminaux 20 sont adaptés à émettre des messages sur un lien montant à destination du réseau d'accès 30.

Chaque station de base 31 est adaptée à recevoir les messages émis par des terminaux 20 qui se trouvent à sa portée. Chaque message ainsi reçu est par exemple transmis à un serveur 32 du réseau d'accès 30, éventuellement accompagné d'autres informations comme un identifiant de la station de base 31 qui l'a reçu, la puissance mesurée dudit message reçu, la date de réception et/ou la fréquence centrale mesurée dudit message reçu, etc. Le serveur 32 traite par exemple l'ensemble des messages reçus des différentes stations de base 31.

En outre, le réseau d'accès 30 est également adapté à émettre, par l'intermédiaire des stations de base 31, des messages sur un lien descendant à destination des terminaux 20, lesquels sont adaptés à les recevoir. Un message peut être émis sur le lien descendant sur une liaison point à point, c'est-à-dire à destination d'un terminal 20 spécifique unique, indiqué comme destinataire dans le message.

Un message descendant émis par le réseau d'accès 30 sur une liaison point à point à destination d'un terminal 20 est reçu par le terminal 20 au cours d'une fenêtre d'écoute prédéterminée par rapport à un message montant précédemment émis par ledit terminal 20. Plus particulièrement, dans l'exemple considéré, après avoir émis un message montant, un terminal passe dans un mode veille (ou économie d'énergie) sur une fenêtre de veille de durée prédéterminée. A la fin de ladite fenêtre de veille, le terminal quitte le mode veille pour écouter le lien descendant sur une fenêtre d'écoute de durée limitée, en attente d'un message descendant émis par une station de base.

Côté réseau d'accès 30, les fenêtres d'écoute des différents terminaux peuvent être déterminées à partir des messages montants reçus de ces terminaux, et le réseau d'accès doit organiser l'émission des messages descendants pour qu'ils puissent être reçus, par les terminaux correspondants, au cours des fenêtres d'écoute respectives desdits terminaux.

Du fait que les terminaux n'écoutent le lien descendant que sur des fenêtres d'écoute prédéterminées, la consommation électrique additionnelle requise pour la réception de messages descendants est limitée, et lesdits terminaux peuvent être le plus souvent en mode veille.

Un message peut également être émis sur un canal de diffusion à destination d'un groupe de terminaux 20, identifié par un identifiant de groupe indiqué comme destinataire dans le message. Le canal de diffusion peut être un canal de diffusion globale, auquel cas le groupe de terminaux 20 correspond à tous les terminaux 20 du système 10 de communication sans fil. Le canal de diffusion peut être un canal de diffusion multipoint, auquel cas le groupe de terminaux 20 correspond à une partie seulement de tous les terminaux 20 du système 10 de communication sans fil.

La figure 2 représente les principales étapes d'un procédé 50 d'émission, par un réseau d'accès 30, d'au moins un message de diffusion à destination d'un groupe de terminaux 20 du système 10 de communication sans fil. Les terminaux 20 sont configurés pour émettre de manière récurrente des messages d'interrogation sur un lien montant à destination du réseau d'accès. Le procédé 50 comporte les étapes suivantes :
- une étape de détermination 51 d'un instant d'émission du message de diffusion à partir d'une information sur la récurrence des messages d'interrogation émis par les terminaux 20 dudit groupe,
- avant l'émission du message de diffusion, une émission 52, par le réseau d'accès 30, en réponse à chaque message d'interrogation reçu d'un terminal 20 appartenant audit groupe, sur une liaison point à point à destination dudit terminal 20, d'un message de réponse comportant un ou plusieurs paramètres relatifs à l'émission du message de diffusion, ledit message de réponse étant voué à être reçu par ledit terminal 20 pendant une fenêtre d'écoute d'une durée prédéterminée suivant l'émission du message d'interrogation,
- une émission 54, par ledit réseau d'accès 30, du message de diffusion sur le canal de diffusion à l'instant d'émission déterminé.

Il est à noter que les différentes étapes illustrées par la figure 2 sont exécutées par le réseau d'accès 30, en l'occurrence par au moins une station de base 31 du réseau d'accès 30, et éventuellement par le serveur 32.

A cet effet, chaque station de base 31 et le serveur 32 comportent par exemple un circuit de traitement (non représenté sur les figures), comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les étapes du procédé 50 d'émission. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes.

Chaque station de base 31 comporte en outre un circuit radioélectrique (non représenté sur les figures) comportant des équipements (antenne, amplificateur, oscillateur local, mélangeur, filtre analogique, etc.) connus de l'homme de l'art, permettant à ladite station de base 31 d'émettre et de recevoir des messages sous la forme de signaux radioélectriques.

En d'autres termes, les circuits de traitement et les circuits radioélectriques des stations de base 31 et du serveur 32 correspondent à des moyens du réseau d'accès 30 qui sont configurés de façon logicielle (produit programme d'ordinateur spécifique) et/ou matérielle (FPGA, PLD, ASIC, composants électroniques discrets, etc.) pour mettre en oeuvre les étapes du procédé 50 d'émission.

A l'étape de détermination 51, l'instant d'émission du message de diffusion sur le canal de diffusion peut être déterminé de sorte à s'assurer que tous les terminaux 20 du groupe ont pu être configuré pour recevoir ledit message de diffusion, c'est-à-dire que tous les terminaux du groupe ont eu une opportunité de recevoir, via les messages de réponse, les informations nécessaires à la réception du message de diffusion, comme par exemple une information sur l'instant d'émission dudit message de diffusion.

Dans une variante, l'instant d'émission du message de diffusion sur le canal de diffusion peut être déterminé de sorte à s'assurer qu'au moins un nombre minimal prédéterminé de terminaux 20 du groupe ont pu être configuré pour recevoir ledit message de diffusion.

L'instant d'émission du message de diffusion est déterminé à partir d'une information sur la récurrence des messages d'interrogation émis par les terminaux 20 du groupe. Cette information peut par exemple correspondre à une période d'émission d'un message d'interrogation commune à tous les terminaux du groupe. Selon un autre exemple, cette information peut correspondre à la période maximale d'émission pour l'ensemble des terminaux du groupe si différents terminaux peuvent avoir des périodes d'émission d'un message d'interrogation différentes. Selon encore un autre exemple, cette information peut correspondre à un intervalle de temps maximal séparant deux messages d'interrogation émis par un terminal du groupe, notamment si les messages d'interrogation ne sont pas émis périodiquement par les terminaux.

Dans un mode particulier de mise en oeuvre, l'étape de détermination 51 d'un instant d'émission du message de diffusion comporte une détermination d'une période d'attente minimale pour recevoir au moins un message d'interrogation en provenance de chaque terminal 20 du groupe, et l'instant d'émission du message de diffusion est déterminé pour être postérieur à l'expiration de ladite période d'attente minimale. De telles dispositions peut notamment permettre de s'assurer que tous les terminaux du groupe ont pu émettre un message d'interrogation et recevoir en retour un message de réponse comportant les informations nécessaires à la réception du message de diffusion avant que ledit message de diffusion ne soit émis.

Il convient de noter qu'un message d'interrogation émis par un terminal 20 peut être émis pour interroger explicitement le réseau d'accès 30 sur la diffusion éventuelle d'un message de diffusion à l'attention dudit terminal. Toutefois, rien n'empêche que le message d'interrogation comporte des données à l'attention du réseau d'accès 30 sans comporter de requête explicite relative à la diffusion éventuelle d'un message de diffusion à l'attention dudit terminal. Le réseau d'accès peut toutefois profiter du fait que le terminal 20 restera en écoute sur un lien descendant pendant une fenêtre d'écoute prédéterminée pour lui envoyer un message de réponse indiquant au terminal 20 qu'un message de diffusion sera prochainement émis pour un groupe de terminaux auquel ledit terminal appartient.

Le message de réponse émis à l'étape d'émission 52 peut comporter un ou plusieurs paramètres permettant de configurer un terminal 20 du groupe pour recevoir le message de diffusion.

Le message de réponse peut notamment comporter une information sur l'instant d'émission du message du diffusion, ou si plusieurs messages de diffusion doivent être émis, sur l'instant d'émission d'un premier message de diffusion. Un terminal 20 du groupe peut alors avantageusement rester en veille, sans écouter le canal de diffusion, pendant une certaine période jusqu'à l'instant d'émission du premier message de diffusion. Le terminal 20 ne commence à écouter le canal de diffusion qu'à compter de l'instant d'émission du premier message de diffusion. De telles dispositions permettent de réduire la consommation électrique du terminal 20.

Le message de réponse peut également comporter une fréquence centrale du canal de diffusion à laquelle le ou les messages de diffusion seront émis.

Le message de réponse peut également comporter un identifiant de groupe assigné dynamiquement par le réseau d'accès 30. On entend par « assignation dynamique » qu'un identifiant de groupe n'est pas défini a priori de manière statique et mémorisé par le réseau d'accès 30 et les terminaux 20. Autrement dit, à chaque fois qu'un canal de diffusion doit être créé, un identifiant de groupe est déterminé par le réseau d'accès 30 pour ledit canal de diffusion. Le réseau d'accès peut réutiliser des identifiants de groupe qui ont déjà été utilisés dans le passé pour d'autres canaux de diffusion, mais qui ne sont pas présentement utilisés. La taille du paramètre qui encode l'identifiant de groupe peut alors dépendre du nombre de canaux de diffusion (c'est-à-dire du nombre d'identifiants de groupe différents) qui peuvent coexister au moment où le canal de diffusion est créé et dans la zone géographique où le canal de diffusion est utilisé. De telles dispositions permettent de réduire la taille du paramètre qui encode une valeur d'identifiant de groupe, et ainsi de limiter la taille du message de réponse qui comporte l'identifiant de groupe. Par exemple, l'identifiant de groupe peut être encodé sur huit bits, ce qui signifie que 256 identifiants de groupe différents, et donc 256 canaux de diffusion différents, peuvent être créés simultanément dans une zone géographique donnée.

Une diffusion globale ou multipoint peut comporter plusieurs messages de diffusion qui sont émis séquentiellement sur le canal de diffusion à destination des terminaux du groupe. Dans un tel cas, il peut aussi être avantageux que le message de réponse comporte des informations permettant de déterminer un ensemble de numéro de séquences destinés à un terminal 20 du groupe, comme par exemple un numéro de séquence du premier message de diffusion, et/ou un numéro de séquence du dernier message de diffusion, et/ou un nombre de messages de diffusion. Cela permet notamment d'optimiser davantage l'utilisation des ressources pour le canal de diffusion. En effet, il devient alors possible de définir, pour un même canal de diffusion, c'est-à-dire pour un même identifiant de groupe, plusieurs sous-groupes de terminaux pour lesquels une partie seulement de l'ensemble des messages de diffusion sont destinés. Par exemple, s'il y a dix messages de diffusion, il devient possible de définir un premier sous-groupe de terminaux pour lesquels les messages dont le numéro de séquence est compris entre un et huit sont destinés, et un deuxième sous-groupe de terminaux pour lesquels les messages dont le numéro de séquence est compris entre quatre et dix sont destinés. Les dix messages ne sont cependant diffusés qu'une seule fois par le réseau d'accès sur un seul canal de diffusion. De telles dispositions sont en effet avantageuses par rapport à créer deux canaux de diffusion : un premier canal de diffusion pour diffuser les messages dont le numéro de séquence est compris entre un et huit à destination du premier sous-groupe de terminaux, et un deuxième canal de diffusion pour diffuser les messages dont le numéro de séquence est compris entre quatre et dix à destination du deuxième sous-groupe de terminaux. En effet, dans un tel cas, quatorze messages seraient diffusés au lieu de dix, et par conséquent l'utilisation des ressources radio n'est pas optimisée.

Dans un tel cas, un terminal 20 peut alors être configuré pour considérer uniquement les messages dont le numéro de séquence est supérieur ou égal à un numéro de séquence d'un premier message de diffusion indiqué dans le message de réponse reçu par ledit terminal 20. Le terminal 20 peut également être configuré pour considérer uniquement un nombre de message de diffusion égal à un nombre de messages de diffusion indiqué dans le message de réponse reçu par le terminal 20. Aussi, le terminal 20 peut également être configuré pour considérer uniquement les messages dont le numéro de séquence est inférieur ou égal à un numéro de séquence d'un dernier message de diffusion indiqué dans le message de réponse reçu par ledit terminal 20. On entend qu'un message de diffusion est « considéré » par le terminal 20 si ledit message de diffusion est utilisé par le terminal 20. Un message de diffusion dont le numéro de séquence est tel qu'il ne doit pas être considéré par le terminal 20 est ignoré. Autrement dit, une couche basse (couche physique ou couche de liaison) du terminal 20 prend la décision de transmettre ou non un message de diffusion à une couche haute (par exemple une couche applicative) du terminal 20 en fonction du numéro de séquence du message reçu et en fonction des numéros de séquence attendus par le terminal 20. Un message de diffusion n'est utilisé par le terminal que si le numéro de séquence du message de diffusion est compris dans les numéros de séquence attendus par le terminal 20.

Il convient de noter que le message de réponse peut comporter des informations permettant de déterminer un ensemble de numéro de séquences destinés à un terminal 20 du groupe sans nécessairement comporter d'information sur l'instant d'émission d'un premier message de diffusion sur le canal de diffusion. Dans un tel cas, un terminal 20 peut par exemple commencer à écouter le canal de diffusion dès qu'il reçoit un message de réponse du réseau d'accès 30 et ignorer tous les messages dont le numéro de séquence n'est pas inclus dans l'ensemble des numéros de séquences qui lui sont destinés.

A l'étape d'émission 54 d'un message de diffusion par le réseau d'accès 30, le message de diffusion peut être émis par une ou plusieurs stations de base 31. Dans la présente description, même si le message de diffusion est émis par plusieurs stations de base 31, on considère qu'il s'agit d'une seule émission du message de diffusion par le réseau d'accès 30.

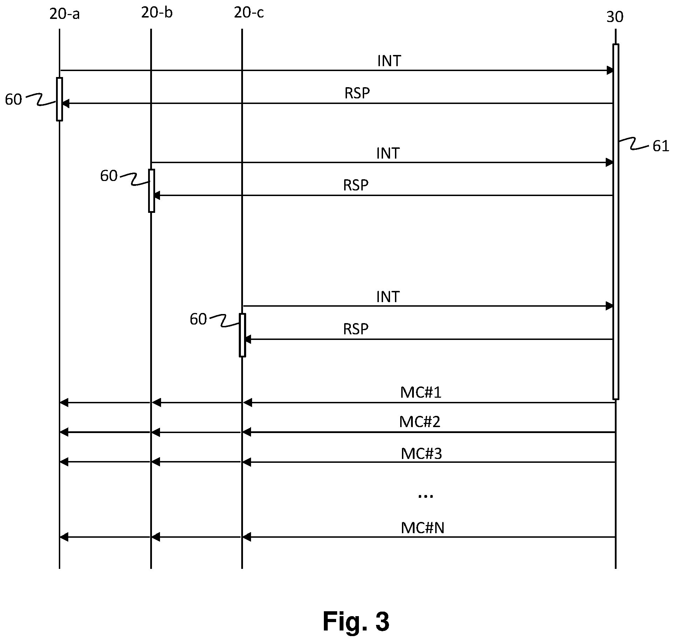

A titre d'exemple nullement limitatif, la figure 3 représente schématiquement les messages échangés entre des terminaux et le réseau d'accès 30 lorsque N messages de diffusion doivent être diffusés par le réseau d'accès 30 sur un canal de diffusion à destination d'un groupe de trois terminaux 20-a, 20-b et 20-c.

Le réseau d'accès 30 détermine par exemple une période 61 d'attente minimale pour recevoir au moins un message d'interrogation INT en provenance de chaque terminal 20-a, 20-b, 20-c du groupe. Cette période 61 d'attente est par exemple déterminée à partir d'un intervalle de temps maximal séparant deux messages d'interrogation émis par un terminal du groupe, la valeur de cet intervalle de temps maximal étant connue a priori par le réseau d'accès 30. Pour déterminer la période 61 d'attente minimale nécessaire, le réseau d'accès 30 peut par exemple mémoriser au cours du temps les différents instants auxquels il reçoit des messages d'interrogation. Un instant d'émission du premier message de diffusion MC#1 est alors déterminé par le réseau d'accès 30 de sorte à être postérieur à l'expiration de la période 61 d'attente, afin de s'assurer que tous les terminaux 20-a, 20-b, 20-c du groupe ont pu émettre un message d'interrogation INT et recevoir en retour un message de réponse RSP comportant les informations nécessaires à la réception du message de diffusion avant que ledit message de diffusion ne soit émis.

Pour chaque message d'interrogation INT reçu d'un terminal 20-a, 20-b, 20-c du groupe pendant la période 61 d'attente, le réseau d'accès émet un message de réponse RSP audit terminal, sur une liaison point à point, de sorte que ledit terminal reçoive ledit message de réponse pendant une fenêtre d'écoute 60 prédéterminée qui suit l'émission du message d'interrogation INT. Chaque message de réponse RSP comporte une information sur l'instant d'émission du premier message de diffusion MC#1, de sorte que chaque terminal 20-a, 20-b, 20-c sait à quel moment il doit commencer à écouter le canal de diffusion. Un message de réponse RSP peut également comporter une information sur le nombre de messages de diffusion, une fréquence centrale du canal de diffusion, une durée d'existence du canal de diffusion, etc. Eventuellement, si seulement une partie des N messages de diffusion sont destinés à l'un des terminaux 20-a, 20-b, 20-c du groupe, un message de réponse RSP peut comporter un numéro de séquence d'un premier message de diffusion et/ou un numéro de séquence d'un dernier message de diffusion destiné(s) audit terminal.

Lorsque l'instant d'émission du premier message de diffusion MC#1 arrive, le réseau d'accès commence à émettre séquentiellement les N messages de diffusion MC#1, MC#2, ..., MC#N sur le canal de diffusion. Les terminaux 20-a, 20-b, 20-c du groupe sont quant à eux configurés pour être à l'écoute du canal de diffusion à partir de l'instant d'émission du premier message de diffusion MC#1.

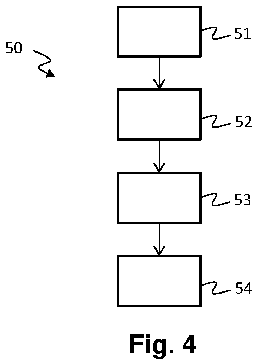

La figure 4 représente schématiquement les principales étapes d'un mode particulier de mise en oeuvre du procédé 50 d'émission. Tel qu'illustré par la figure 4, le procédé 50 d'émission reprend toutes les étapes de la figure 2.

Tel qu'illustré par la figure 4, le procédé 50 d'émission comporte en outre une étape de sélection 53, par le réseau d'accès 30, d'un ensemble de stations de base 31 du réseau d'accès 30 participant à l'émission 54 du message de diffusion. Cette sélection est effectuée en fonction des messages d'interrogation reçus par les terminaux 20 du groupe.

Dans le procédé selon l'invention, le réseau d'accès 30 sait en effet à quels terminaux 20 du groupe les informations relatives au canal de diffusion ont été envoyées via un message de réponse. Il est donc possible, pour le réseau d'accès, de sélectionner un ensemble de stations de base 31 permettant de couvrir ces terminaux qui ont été configurés pour recevoir le message de diffusion. De telles dispositions permettent d'optimiser l'utilisation des ressources radio pour un canal de diffusion puisqu'il est alors possible d'éviter une émission inutile d'un message de diffusion par une station de base qui ne couvre aucun terminal du groupe.

Dans un mode particulier de mise en oeuvre, une station de base 31 du réseau d'accès 30 est sélectionnée pour émettre le message de diffusion seulement si ladite station de base 31 a reçu un nombre de messages d'interrogation en provenance des terminaux 20 du groupe supérieur à un seuil prédéterminé.

## Revendications

1. - Procédé (50) d'émission d'au moins un message, dit « message de diffusion », par un réseau d'accès (30) d'un système (10) de communication sans fil, ledit message étant émis sur un canal de diffusion à destination d'un groupe de terminaux (20) dudit système (10) de communication sans fil, lesdits terminaux (20) étant configurés pour émettre de manière récurrente, et à des instants qui ne sont pas connus a priori par le réseau d'accès (30), des messages, dits « messages d'interrogation », sur un lien montant à destination du réseau d'accès (30),
**caractérisé en ce que** ledit procédé (50) comporte :
- une détermination (51), par le réseau d'accès (30), d'un instant d'émission du message de diffusion à partir d'une information sur la récurrence des messages d'interrogation émis par les terminaux (20) dudit groupe,
- avant l'émission du message de diffusion, une émission (52), par le réseau d'accès (30), en réponse à chaque message d'interrogation reçu d'un terminal (20) appartenant audit groupe, sur une liaison point à point à destination dudit terminal (20), d'un message, dit « message de réponse », comportant un ou plusieurs paramètres relatifs à l'émission du message de diffusion, ledit message de réponse étant émis de sorte à être reçu par ledit terminal (20) pendant une fenêtre d'écoute d'une durée prédéterminée suivant l'émission du message d'interrogation,
- une émission (54), par ledit réseau d'accès (30), du message de diffusion sur le canal de diffusion à l'instant d'émission déterminé.

2. - Procédé (50) selon la revendication 1, dans lequel un message de réponse émis à un terminal (20) du groupe comporte un ou plusieurs paramètres parmi les paramètres suivants :
- une information sur l'instant d'émission du message de diffusion,
- un identifiant de groupe assigné dynamiquement par le réseau d'accès (30),
- une fréquence centrale du canal de diffusion,
- lorsque plusieurs messages de diffusion doivent être diffusés séquentiellement, un numéro de séquence d'un premier message de diffusion, et/ou un numéro de séquence d'un dernier message de diffusion, et/ou un nombre de messages de diffusion.

3. - Procédé (50) selon l'une quelconque des revendications 1 à 2, dans lequel l'information sur la récurrence des messages d'interrogation émis par les terminaux (20) du groupe est un intervalle de temps maximal séparant deux messages d'interrogation émis par un terminal (20) du groupe.

4. - Procédé (50) selon l'une quelconque des revendications 1 à 3, dans lequel la détermination (51) d'un instant d'émission du message de diffusion comporte une détermination d'une période d'attente minimale pour recevoir au moins un message d'interrogation en provenance de chaque terminal (20) du groupe, l'instant d'émission du message de diffusion étant déterminé pour être postérieur à l'expiration de ladite période d'attente minimale.

5. - Procédé (50) selon l'une quelconque des revendications 1 à 4 comportant en outre une sélection (53), par le réseau d'accès (30), d'un ensemble de stations de base (31) du réseau d'accès (30) participant à l'émission (54) du message de diffusion, en fonction des messages d'interrogation reçus par les terminaux (20) du groupe.

6. - Procédé (50) selon la revendication 5 dans lequel une station de base (31) du réseau d'accès (30) est sélectionnée pour émettre le message de diffusion seulement si ladite station de base (31) a reçu un nombre de messages d'interrogation en provenance des terminaux (20) du groupe supérieur à un seuil prédéterminé.

7. - Réseau d'accès (30) d'un système (10) de communication sans fil comportant une pluralité de stations de base (31) adaptées à échanger des messages avec des terminaux (20) dudit système (10) de communication sans fil, ledit réseau d'accès (30) étant configuré pour recevoir de manière récurrente, et à des instants qui ne sont pas connus a priori par le réseau d'accès (30), des messages, dits « messages d'interrogation », émis par lesdits terminaux (20) sur un lien montant à destination du réseau d'accès (30), ledit réseau d'accès (30) étant configuré pour émettre au moins un message, dit « message de diffusion » à destination d'un groupe de terminaux (20) sur un canal de diffusion,
**caractérisé en ce que** ledit réseau d'accès est configuré pour:
- déterminer un instant d'émission du message de diffusion à partir d'une information sur la récurrence des messages d'interrogation émis par les terminaux (20) dudit groupe,
- avant l'émission du message de diffusion, émettre, en réponse à chaque message d'interrogation reçu d'un terminal (20) appartenant audit groupe, sur une liaison point à point à destination dudit terminal (20), un message, dit « message de réponse », comportant un ou plusieurs paramètres relatifs à l'émission du message de diffusion, ledit message de réponse étant émis de sorte à être reçu par ledit terminal (20) pendant une fenêtre d'écoute d'une durée prédéterminée suivant l'émission du message d'interrogation,
- émettre le message de diffusion sur le canal de diffusion à l'instant d'émission déterminé.

8. - Réseau d'accès (30) selon la revendication 7, dans lequel un message de réponse émis à un terminal (20) du groupe comporte un ou plusieurs paramètres parmi les paramètres suivants :
- une information sur l'instant d'émission du message de diffusion,
- un identifiant de groupe assigné dynamiquement par le réseau d'accès (30),
- une fréquence centrale du canal de diffusion,
- lorsque plusieurs messages de diffusion doivent être diffusés séquentiellement, un numéro de séquence d'un premier message de diffusion, et/ou un numéro de séquence d'un dernier message de diffusion, et/ou un nombre de messages de diffusion.

9. - Réseau d'accès (30) selon l'une des revendications 7 à 8 dans lequel l'instant d'émission du message de diffusion est déterminé en fonction d'une période d'attente minimale nécessaire pour recevoir au moins un message d'interrogation en provenance de chaque terminal (20) du groupe.

10. - Réseau d'accès (30) selon l'une quelconque des revendications 7 à 9 configuré en outre pour sélectionner un ensemble de stations de base (31) du réseau d'accès (30) participant à l'émission du message de diffusion, en fonction des messages d'interrogation reçus par les terminaux (20) du groupe.

11. - Terminal (20) d'un système (10) de communication sans fil comportant un réseau d'accès (30), ledit réseau d'accès (30) comportant une pluralité de stations de base (31) adaptées à échanger des messages avec ledit terminal (20), ledit terminal (20) étant configuré pour émettre de manière récurrente, et à des instants qui ne sont pas connus a priori par le réseau d'accès (30), un message, dit « message d'interrogation », sur un lien montant à destination du réseau d'accès (30), ledit terminal (20) étant configuré pour recevoir au moins un message, dit « message de diffusion », émis par le réseau d'accès (30), sur un canal de diffusion, à destination d'un groupe de terminaux (20) auquel ledit terminal (20) appartient, **caractérisé en ce que** ledit terminal (20) est configuré pour recevoir sur une liaison point à point entre le réseau d'accès (30) et le terminal (20), pendant une fenêtre d'écoute d'une durée prédéterminée suivant l'émission du message d'interrogation, un message, dit « message de réponse », comportant une information sur l'instant d'émission dudit message de diffusion et/ou, lorsque plusieurs messages de diffusion doivent être diffusés séquentiellement, des informations permettant de déterminer un ensemble de numéro de séquences destinés au terminal (20).

12. - Terminal (20) selon la revendication 11 **caractérisé en ce que** le message de réponse comporte une information sur l'instant d'émission dudit au moins un message de diffusion, et le terminal est configuré pour commencer à écouter le canal de diffusion pour recevoir le ou les messages de diffusion à partir dudit instant d'émission.

13. - Terminal (20) selon l'une des revendications 11 à 12 **caractérisé en ce que** le message de réponse comporte des informations permettant de déterminer un ensemble de numéro de séquences destinés au terminal (20), et le terminal (20) est configuré pour considérer uniquement les messages de diffusion dont le numéro de séquence est inclus dans l'ensemble de numéros de séquence destinés au terminal (20).

## Patentansprüche

1. Verfahren (50) zum Senden mindestens einer "Ausstrahlungsnachricht" genannten Nachricht über ein Zugangsnetzwerk (30) eines drahtlosen Kommunikationssystems (10), wobei die Nachricht auf einem Ausstrahlungskanal an eine Gruppe von Endgeräten (20) des drahtlosen Kommunikationssystems (10) gesendet wird, wobei die Endgeräte (20) konfiguriert sind, um wiederkehrend und zu Zeitpunkten, die dem Zugangsnetzwerk (30) vorab nicht bekannt sind, "Anfragenachrichten" genannte Nachrichten auf einer Aufwärtsverbindung an das Zugangsnetzwerk (30) zu senden,
**dadurch gekennzeichnet, dass** das Verfahren (50) beinhaltet:
- eine Bestimmung (51) durch das Zugangsnetzwerk (30) eines Sendezeitpunkts der Ausstrahlungsnachricht ausgehend von einer Information über die Wiederkehr der Anfragenachrichten, die von den Endgeräten (20) der Gruppe gesendet werden,
- vor dem Senden der Ausstrahlungsnachricht eine Sendung (52) durch das Zugangsnetzwerk (30) als Reaktion auf jede Anfragenachricht, die von einem Endgerät (20), das der Gruppe angehört, empfangen wird, auf einer Direktverbindung einer sogenannten "Antwortnachricht" an das Endgerät (20), welche einen oder mehrere Parameter in Bezug auf die Sendung der Ausstrahlungsnachricht beinhaltet, wobei die Antwortnachricht derart gesendet wird, um von dem Endgerät (20) während eines Hörfensters mit einer vorbestimmten Dauer nach dem Senden der Anfragenachricht empfangen zu werden,
- eine Sendung (54) durch das Zugangsnetzwerk (30) der Ausstrahlungsnachricht auf dem Ausstrahlungskanal zum bestimmten Sendezeitpunkt.

2. Verfahren (50) nach Anspruch 1, wobei die an ein Endgerät (20) der Gruppe gesendete Antwortnachricht einen oder mehrere Parameter unter den folgenden Parametern beinhaltet:
- eine Information über den Sendezeitpunkt der Ausstrahlungsnachricht,
- eine Gruppenidentifizierung, die vom Zugangsnetzwerk (30) dynamisch zugewiesen wird,
- eine Mittenfrequenz des Ausstrahlungskanals,
- wenn mehrere Ausstrahlungsnachrichten aufeinanderfolgend ausgestrahlt werden müssen, eine Folgenummer einer ersten Ausstrahlungsnachricht, und/oder eine Folgenummer einer letzten Ausstrahlungsnachricht, und/oder eine Anzahl an Ausstrahlungsnachrichten.

3. Verfahren (50) nach einem der Ansprüche 1 bis 2, wobei die Information über die Wiederkehr der Anfragenachrichten, die von den Endgeräten (20) der Gruppe gesendet werden, ein maximales Zeitintervall ist, welches zwei Anfragenachrichten, die von einem Endgerät (20) der Gruppe gesendet werden, trennt.

4. Verfahren (50) nach einem der Ansprüche 1 bis 3, wobei die Bestimmung (51) eines Sendezeitpunkts der Ausstrahlungsnachricht eine Bestimmung eines Mindestwartezeitraums beinhaltet, um mindestens eine Anfragenachricht von jedem Endgerät (20) der Gruppe zu empfangen, wobei der Sendezeitpunkt der Ausstrahlungsnachricht bestimmt wird, um nach Ablauf des Mindestwartezeitraums zu sein.

5. Verfahren (50) nach einem der Ansprüche 1 bis 4, das weiter eine Auswahl (53) durch das Zugangsnetzwerk (30) einer Reihe von Basisstationen (31) des Zugangsnetzwerks (30), die an der Sendung (54) der Ausstrahlungsnachricht teilnehmen, in Abhängigkeit der von den Endgeräten (20) der Gruppe empfangenen Anfragenachrichten beinhaltet.

6. Verfahren (50) nach Anspruch 5, wobei eine Basisstation (31) des Zugangsnetzwerks (30) ausgewählt wird, um die Ausstrahlungsnachricht nur dann zu senden, wenn die Basisstation (31) eine Anzahl an Anfragenachrichten von den Endgeräten (20) der Gruppe empfangen hat, die größer als eine vorbestimmte Schwelle ist.

7. Zugangsnetzwerk (30) eines drahtlosen Kommunikationssystems (10), das eine Vielzahl von Basisstationen (31) beinhaltet, die angepasst sind, um Nachrichten mit Endgeräten (20) des drahtlosen Kommunikationssystems (10) auszutauschen, wobei das Zugangsnetzwerk (30) konfiguriert ist, um wiederkehrend und zu Zeitpunkten, die dem Zugangsnetzwerk (30) vorab nicht bekannt sind, "Anfragenachrichten" genannte Nachrichten zu empfangen, die von den Endgeräten (20) auf einer Aufwärtsverbindung an das Zugangsnetzwerk (30) gesendet werden, wobei das Zugangsnetzwerk (30) konfiguriert ist, um auf einem Ausstrahlungskanal mindestens eine "Ausstrahlungsnachricht" genannte Nachricht an eine Gruppe von Endgeräten (20) zu senden, **dadurch gekennzeichnet, dass** das Zugangsnetzwerk konfiguriert ist, um:
- einen Sendezeitpunkt der Ausstrahlungsnachricht ausgehend von einer Information über die Wiederkehr der Anfragenachrichten, die von den Endgeräten (20) der Gruppe gesendet werden, zu bestimmen,
- vor dem Senden der Ausstrahlungsnachricht, als Reaktion auf jede Anfragenachricht, die von einem Endgerät (20), das der Gruppe angehört, empfangen wird, auf einer Direktverbindung zum Endgerät (20) eine "Antwortnachricht" genannte Nachricht zu senden, welche einen oder mehrere Parameter in Bezug auf die Sendung der Ausstrahlungsnachricht beinhaltet, wobei die Antwortnachricht derart gesendet wird, um von dem Endgerät (20) während eines Hörfensters mit einer vorbestimmten Dauer nach dem Senden der Anfragenachricht empfangen zu werden,
- die Ausstrahlungsnachricht auf dem Ausstrahlungskanal zum bestimmten Sendezeitpunkt zu senden.

8. Zugangsnetzwerk (30) nach Anspruch 7, wobei eine an ein Endgerät (20) der Gruppe gesendete Antwortnachricht einen oder mehrere Parameter unter den folgenden Parametern beinhaltet:
- eine Information über den Sendezeitpunkt der Ausstrahlungsnachricht,
- eine Gruppenidentifizierung, die vom Zugangsnetzwerk (30) dynamisch zugewiesen wird,
- eine Mittenfrequenz des Ausstrahlungskanals,
- wenn mehrere Ausstrahlungsnachrichten aufeinanderfolgend ausgestrahlt werden müssen, eine Folgenummer einer ersten Ausstrahlungsnachricht, und/oder eine Folgenummer einer letzten Ausstrahlungsnachricht, und/oder eine Anzahl an Ausstrahlungsnachrichten.

9. Zugangsnetzwerk (30) nach einem der Ansprüche 7 bis 8, wobei der Sendezeitpunkt der Ausstrahlungsnachricht in Abhängigkeit von einem Mindestwartezeitraum bestimmt wird, der notwendig ist, um mindestens eine Anfragenachricht von jedem Endgerät (20) der Gruppe zu empfangen.

10. Zugangsnetzwerk (30) nach einem der Ansprüche 7 bis 9, das weiter konfiguriert ist, um eine Reihe von Basisstationen (31) des Zugangsnetzwerks (30), die an der Sendung der Ausstrahlungsnachricht teilnehmen, in Abhängigkeit von den von den Endgeräten (20) der Gruppe empfangenen Anfragenachrichten auszuwählen.

11. Endgerät (20) eines drahtlosen Kommunikationssystems (10), das ein Zugangsnetzwerk (30) beinhaltet, wobei das Zugangsnetzwerk (30) eine Vielzahl von Basisstationen (31) beinhaltet, die angepasst sind, um Nachrichten mit dem Endgerät (20) auszutauschen, wobei das Endgerät (20) konfiguriert ist, um wiederkehrend und zu Zeitpunkten, die dem Zugangsnetzwerk (30) vorab nicht bekannt sind, eine "Anfragenachricht" genannte Nachricht auf einer Aufwärtsverbindung an das Zugangsnetzwerk (30) zu senden, wobei das Endgerät (20) konfiguriert ist, um mindestens eine "Ausstrahlungsnachricht" genannte Nachricht zu empfangen, die von dem Zugangsnetzwerk (30) auf einem Ausstrahlungskanal an eine Gruppe von Endgeräten (20) gesendet wird, der das Endgerät (20) angehört, **dadurch gekennzeichnet, dass** das Endgerät (20) konfiguriert ist, um auf einer Direktverbindung zwischen dem Zugangsnetzwerk (30) und dem Endgerät (20) während eines Hörfensters mit einer vorbestimmten Dauer nach dem Senden der Anfragenachricht eine "Antwortnachricht" genannt Nachricht zu empfangen, welche eine Information über den Sendezeitpunkt der Ausstrahlungsnachricht, und/oder, wenn mehrere Ausstrahlungsnachrichten aufeinanderfolgend ausgestrahlt werden müssen, Informationen beinhaltet, die es ermöglichen, eine Reihe von Folgenummern zu bestimmen, die für das Endgerät (20) bestimmt sind.

12. Endgerät (20) nach Anspruch 11, **dadurch gekennzeichnet, dass** die Antwortnachricht eine Information über den Sendezeitpunkt der mindestens einen Ausstrahlungsnachricht beinhaltet, und das Endgerät konfiguriert ist, um damit zu beginnen, den Ausstrahlungskanal abzuhören, um die Ausstrahlungsnachricht(-en) ausgehend von dem Sendezeitpunkt zu empfangen.

13. Endgerät (20) nach einem der Ansprüche 11 bis 12, **dadurch gekennzeichnet, dass** die Antwortnachricht Informationen beinhaltet, die es ermöglichen, eine Reihe von Folgenummern zu bestimmen, die für das Endgerät (20) bestimmt sind, und das Endgerät (20) konfiguriert ist, um nur die Ausstrahlungsnachrichten zu berücksichtigen, deren Folgenummer in der Reihe von Folgenummern beinhaltet ist, die für das Endgerät (20) bestimmt sind.

## Claims

1. - Method (50) for transmitting at least one message, known as "broadcasting message", by an access network (30) of a wireless communication system (10), said message being transmitted over a broadcasting channel to a group of terminals (20) of said wireless communication system (10), said terminals (20) being configured to transmit messages, known as "polling messages", on an uplink to the access network (30) in a recurrent manner, at instants which are not known a priori by the access network, **characterised in that** said method (50) includes:
- determining (51), by the access network (30), an instant for transmitting the broadcasting message on the basis of information relating to the recurrence of the polling messages transmitted by the terminals (20) of said group,
- before transmitting the broadcasting message, transmitting (52), by the access network (30), in response to each polling message received from a terminal (20) belonging to said group, on a point-to-point connection to said terminal (20), a message, known as "response message", including one or more parameters relating to the transmission of the broadcasting message, said response message being transmitted such as to be received by said terminal (20) during a listening window with a predetermined duration following the transmission of the polling message,
- transmitting (54), by said access network (30), the broadcasting message over the broadcasting channel at the determined instant for transmitting.

2. - Method (50) according to claim 1, wherein a response message transmitted to a terminal (20) of the group includes one or more parameters from the following parameters:
- information relating to the instant for transmitting the broadcasting message,
- a group identifier dynamically assigned by the access network (30),
- a centre frequency of the broadcasting channel,
- when a plurality of broadcasting messages must be broadcast sequentially, a sequence number of a first broadcasting message, and/or a sequence number of a last broadcasting message, and/or a number of broadcasting messages.

3. - Method (50) according to any one of claims 1 to 2, wherein information relating to the recurrence of the polling messages transmitted by the terminals (20) of the group is a maximum time interval separating two polling messages transmitted by a terminal (20) of the group.

4. - Method (50) according to any one of claims 1 to 3, wherein determining (51) an instant for transmitting the broadcasting message includes determining a minimum waiting period for receiving at least one polling message coming from each terminal (20) of the group, the instant for transmitting the broadcasting message being determined to be after the expiry of said minimum waiting period.

5. - Method (50) according to any one of claims 1 to 4 further including selecting (53), by the access network (30), a set of base stations (31) of the access network (30) contributing to the transmission (54) of the broadcasting message, as a function of the polling messages received by the terminals (20) of the group.

6. - Method (50) according to claim 5 wherein a base station (31) of the access network (30) is selected to transmit the broadcasting message only if said base station (31) has received a number of polling messages coming from terminals (20) of the group higher than a predetermined threshold.

7. - Access network (30) of a wireless communication system (10) including a plurality of base stations (31) adapted to exchange messages with terminals (20) of said wireless communication system (10), said access network (30) being configured to receive in a recurrent manner, and at instants which are not known a priori by the access network (30), messages, known as "polling messages", transmitted by said terminals (20) on an uplink to the access network (30), said access network (30) being configured to transmit at least one message, known as "broadcasting message" to a group of terminals (20) over a broadcasting channel,
**characterised in that** said access network is configured to:
- determine an instant for transmitting the broadcasting message on the basis of information relating to the recurrence of the polling messages transmitted by the terminals (20) of said group,
- before transmitting the broadcasting message, transmit, in response to each polling message received from a terminal (20) belonging to said group, on a point-to-point connection to said terminal (20), a message, known as "response message", including one or more parameters relating to the transmission of the broadcasting message, said response message being transmitted such as to be received by said terminal (20) during a listening window with a predetermined duration following the transmission of the polling message,
- transmit the broadcasting message over the broadcasting channel at the determined instant for transmitting.

8. - Access network (30) according to claim 7, wherein a response message transmitted to a terminal (20) of the group includes one or more parameters from the following parameters:
- information relating to the instant for transmitting the broadcasting message,
- a group identifier dynamically assigned by the access network (30),
- a centre frequency of the broadcasting channel,
- when a plurality of broadcasting messages must be broadcast sequentially, a sequence number of a first broadcasting message, and/or a sequence number of a last broadcasting message, and/or a number of broadcasting messages.

9. - Access network (30) according to one of claims 7 to 8 wherein the instant for transmitting the broadcasting message is determined as a function of a minimum waiting period necessary for receiving at least one polling message coming from each terminal (20) of the group.

10. - Access network (30) according to any one of claims 7 to 9 further configured to select a set of base stations (31) of the access network (30) contributing to the transmission of the broadcasting message, as a function of the polling messages received by the terminals (20) of the group.

11. - Terminal (20) of a wireless communication system (10) including an access network (30), said access network (30) including a plurality of base stations (31) adapted to exchange messages with said terminal (20), said terminal (20) being configured to transmit in a recurrent manner, and at instants which are not known a priori by the access network (30), a message, known as "polling message", on an uplink to the access network (30), said terminal (20) being configured to receive at least one message, known as "broadcasting message", transmitted by the access network (30), over a broadcasting channel, to a group of terminals (20) to which said terminal (20) belongs, **characterised in that** said terminal (20) is configured to receive on a point-to-point connection between the access network (30) and the terminal (20), during a listening window with a predetermined duration following the transmission of the polling message, a message, known as "response message", including information relating to the instant for transmitting said broadcasting message and/or, when a plurality of broadcasting messages must be broadcast sequentially, information making it possible to determine a set of sequence numbers intended for the terminal (20).

12. - Terminal (20) according to claim 11 **characterised in that** the response message includes information relating to the instant for transmitting said at least one broadcasting message, and the terminal is configured to start listening to the broadcasting channel in order to receive the broadcasting message or messages on the basis of said instant for transmitting.

13. - Terminal (20) according to one of claims 11 to 12 **characterised in that** the response message includes information making it possible to determine a set of sequence numbers intended for the terminal (20), and the terminal (20) is configured to consider only the broadcasting messages the sequence number of which is included in the set of sequence numbers intended for the terminal (20).
